Europäisches Patentamt

European Patent Office

Office européen des brevets

(11) Veröffentlichungsnummer: **0 277 526**
**A2**

(12) **EUROPÄISCHE PATENTANMELDUNG**

(21) Anmeldenummer: 88100551.6

(22) Anmeldetag: 16.01.88

(51) Int. Cl.⁴: **G05D 16/20 , F16K 31/06**

(30) Priorität: 31.01.87 DE 3702958

(43) Veröffentlichungstag der Anmeldung:
**10.08.88 Patentblatt 88/32**

(84) Benannte Vertragsstaaten:
**AT BE CH DE ES FR GB IT LI NL SE**

(71) Anmelder: **Drägerwerk Aktiengesellschaft**
**Moislinger Allee 53-55**
**D-2400 Lübeck 1(DE)**

(72) Erfinder: **Maurer, Christoph, Dipl.-Ing.**
**Rohlsdorfer WEG 21**
**D-2409 Techau(DE)**

(54) **Druckminderer mit regelbarem Auslassdruck.**

㊻ Ein Druckminderer, dessen Auslaßdruck über einen Soll-Istwert-Vergleich regelbar ist, zeichnet sich dadurch aus, daß sein Einstellbereich erweitert ist. Dies wird dadurch erreicht, daß die entsprechende Einstellung (27) der Vorspannkraft der Membran zugleich über einen Stellwertübertrager (29, 30, 31, 32) eine entsprechende Sollwertanpassung an der Regeleinheit (13) bewirkt.

EP 0 277 526 A2

Die Erfindung betrifft einen Druckminderer mit einer Einlaßkammer, die an eine Auslaßkammer über ein Ventil verbindbar ist, das durch ein Kopplungselement betätigbar ist, welches an eine die Auslaßkammer gegenüber der Umgebung abschließende druckempfindliche Membran befestigt ist, wobei ein auslaßseitig angeordneter Druckaufnehmer mit einer Regeleinheit verbunden ist, über die das Kopplungselement durch eine Verschiebeeinrichtung entsprechend einem aus dem Vergleich zwischen gemessenem Auslaßdruck und einem der Regeleinheit vorgebbaren Drucksollwert gewonnenen Verschiebesteuersignal bewegbar ausgebildet ist und die Verschiebeeinrichtung durch ein in seiner Vorspannkraft veränderliches federelastisches Regulierelement einstellbar ist.

Ein derartiger Druckminderer ist aus der US-A-3 811 465 bekanntgeworden.

Bei dem bekannten Druckminderer wird das Ventil durch ein eine Grundspannung vorgebendes federelastisches Regulierelement in Form einer einstellbaren Justierfeder und eine als Tauchspule ausgebildete Verschiebeeinrichtung so weit geöffnet, bis ein Gleichgewicht zwischen dem vorgegebenen Auslaßdruck, der in der Auslaßkammer auf die Membran einwirkt, und der auf die Membran von der Justierfeder une Tauchspule ausgeübten Gegenkraft besteht. Der auslaßseitige Druck wird von der Regeleinheit ständig überwacht und durch Abgabe eines Steuersignals an die Tauchspule auf dem Sollwert gehalten. Wenn die Kraft des auslaßseitigen Druckes auf die Membran im Gleichgewicht zu der entgegengerichteten Kraft von Justierfeder und Tauchspule steht, ist auch die Regelstrecke im Gleichgewicht, so daß das Ventil in einer mittleren Gleichgewichtslage verharrt. Der Tauchspulenantrieb ist nur dann stromlos, wenn die Vorspannkraft des Regulierelements mit der vom Auslaßdruck hervorgerufenen Kraft auf die Membran im Gleichgewicht steht, also nur bei einem einzigen Sollwert.

Bei dem bekannten Druckminderer ist es von Nachteil, daß eine Änderung des gewünschten Auslaßdruckes durch Verstellung des Regulierelements allein nicht möglich ist. Denn eine Änderung der Vorspannkraft des Regulierelements würde durch die Regeleinheit kompensiert und bliebe ohne Einfluß auf den Auslaßdruck. Außerdem ist das Regulierelement nur für Justierzwecke vorgesehen und besitzt lediglich eine begrenzte Verstellmöglichkeit. Schließlich ist bei einer von Hand sowohl am Regulierelement als auch an der Sollwerteingabe der Regeleinheit durchgeführten gleichzeitigen Verstellung nur schwer eine Übereinstimmung der beiden eingestellten Werte zu erreichen. Die Abweichungen aber führen zu einer Kompensation durch die Regeleinheit und Belastung des Tauchspulenantriebs. Sollwertänderungen können daher nur elektrisch erfolgen, indem die Tauchspule mit einem Dauerstrom versorgt wird, derart, daß sich ein neues, dem veränderten Sollwert entsprechendes Gleichgewicht einstellt. Der so einstellbare Bereich von Sollwerten ist eingegrenzt durch die maximale Kraft des Tauchspulenantriebs.

Der bekannte Druckminderer kann daher nur in einem engen Bereich von Sollwerten eingesetzt werden, will man nicht einen unnötig großen, unnötig Energie verbrauchenden Antrieb einsetzen.

Der Erfindung liegt somit die Aufgabe zugrunde, einen Druckminderer der genannten Art so zu verbessern, daß sein Betrieb ohne Vergrößerung des Antriebs einen weiten Bereich von Sollwerten umfassen kann, wobei die dafür notwendige Vorspannkraft dem jeweiligen Einsatzbereich anpaßbar sein soll.

Die Lösung der Aufgabe wird dadurch erzielt, daß ein Stellwertübertrager an das mit einem Einsteller versehene Regulierelement angekoppelt und zur Übertragung des Sollwertes über eine Sollwertleitung an die Regeleinheit verbunden ist.

Jetzt erfolgt eine Änderung der Sollwertvorgabe durch Verstellung der Vorspannkraft des Regulierelements über einen Einsteller von Hand vorzugsweise bei entlastetem Verschiebeelement. Der Stellwertübertrager übermittelt beispielsweise mechanisch-elektrisch oder optisch-elektrisch ein der Vorspannkraft proportionales Signal als Sollwertvorgabe an die Regeleinheit. Dadurch ist, bei Eingabe der Änderung an nur einem einzigen Einsteller, gesichert, daß die mechanische und die elektrische Sollwertvorgabe stets miteinander in Übereinstimmung sind. Ist der Einstellvorgang beendet, übernimmt die Regeleinheit wieder die Kontrolle über das Verschiebeelement. Der neue Sollwert kann so bei entlastetem Verschiebeelement eingehalten werden. Lediglich Abweichungen des Istwerts von diesem neuen Sollwert werden vom Verschiebeelement kompensiert.

Somit erhält man einen Druckminderer, dessen Sollwert in weiten Grenzen vorgewählt werden kann und dessen Abweichungen des Auslaßdrucks vom eingestellten Sollwert mit geringem Energieaufwand genauestens korrigiert werden.

Eine besonders einfache und zweckmäßige Ausführung des Regulierelements besteht aus einem Gewindestift, der mit seinem einen Ende mit einer die Verschiebeeinrichtung angreifenden Feder verbunden und an seinem anderen Ende mit einem Handrad versehen ist.

Der Stellwertübertrager kann in weiterer Ausgestaltung der Erfindung aus zwei ineinandergreifenden Zahnrädern bestehen, von denen das eine an dem Gewindestift und das andere an der Achse eines Drehpotentiometers befestigt ist. Bei Verstellung der Antriebsvorrichtung von Hand zur Einstellung eines neuen Sollwertes wird das Drehpotentiometer gemäß dem Übersetzungsverhältnis der beiden Zahnräder mitgeführt und gibt ein entsprechendes Sollwertsignal an die Regeleinheit ab. Die zwangsläufige Verbindung mittels der Verzahnung sichert dabei eine reproduzierbare Verkettung zwischen der gewählten Position des Regulierelements und dem durch die Stellung des Potentiometers bestimmten elektrischen Sollwertsignal. Durch die Wahl des Übersetzungsverhältnisses sind die Charakteristiken der Feder und des Potentiomenters in Übereinstimmung gebracht.

In einer wahlweisen Ausgestaltung kann der Stellwertübertrager aus einem Opto-Encoder, der fest mit dem Gewindestift verbunden ist, bestehen. Dieser liefert eine dem Verdrehwinkel des Handrades proportionale Anzahl von Impulsen an die Regeleinheit.

Die Ausgestaltung des Handrades in Form einer elektrischen Fernbetätigung erlaubt einen Einbau des Druckminderers an strömungsgünstigem, aber schwer erreichbarem Ort und Herausführung der Betätigung an eine gut zugängliche Stelle.

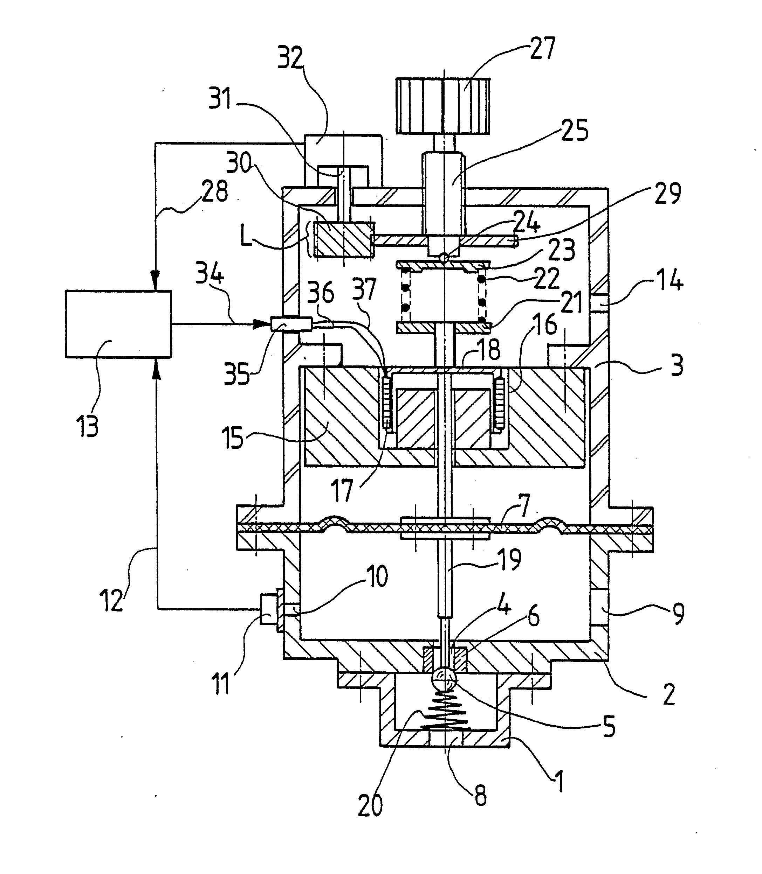

Ein Ausführungsbeispiel der Erfindung ist in der Zeichnung schematisch dargestellt und wird im folgenden näher erläutert.

Die einzige Figur zeigt den Druckminderer, der aus drei Gehäuseteilen besteht: Der Einlaßkammer (1), der Auslaßkammer (2) und der Steuerkammer (3). In der Verbindungswand zwischen Einlaßkammer (1) und Auslaßkammer (2) ist ein Durchlaß (4) angebracht, welcher mit einem Kugelventil (5, 6) verschließbar ist. Auslaßkammer (2) und Steuerkammer (3) sind mit einer Membran (7) voneinander abgetrennt, welche mit bekannten Mitteln zwischen den Rändern der beiden Kammern (2, 3) eingespannt ist. Die Einlaßkammer (1) besitzt eine Einlaßöffnung (8) und die Auslaßkammer (2) eine Auslaßöffnung (9). Über eine Meßöffnung (10) ist ein Drucksensor (11) angeordnet, dessen Sensorleitung (12) mit einer Regeleinheit (13) verbunden ist. In der über eine Öffnung (14) mit der Umgebung verbundenen Steuerkammer (3) ist ein Permanentmagnet (15) befestigt, der in seinem zentralen Bereich eine Ausnehmung (16) aufweist, in der eine als Verschiebeelement dienende Tauchspule (17) axial bewegbar auf einem Träger (18) befestigt ist. Der Träger (18) der Tauchspule (17) ist über einen Stift (19) mit der Membran (7) verbunden, wobei die Spitze des Stiftes (19) als Kopplungselement die Kugel (5) des Kugelventils (5, 6) berührt, welche über eine Kegelfeder (20) abgestützt wird. Das andere Ende des Stiftes (19) ist mit einer Tellerscheibe (210 abgeschlossen, auf welcher eine Schraubenfeder (22) aufsitzt, die mit einem Halter (23) eingespannt wird, der über eine Lagerkugel (24) an einen Gewindestift (25) drückt, welcher eine Wand des Steuergehäuses (3) durchdringt. Kugel (5), Stift (19), Feder (22) und Gewindestift (25) sind axial zueinander ausgerichtet. Der Gewindestift (25) ist mit einem Handrad (27) betätigbar. Gewindestift (25), Handrad (27) und die eingespannte Feder (22) bilden zusammen das Regulierelement, mit welchem die Vorspannkraft der Tauchspule (17) einstellbar ist.

Der durch den Druckminderer einzuregelnde Sollwert über eine Sollwertleitung (28) eingegeben. Dazu wird die Drehbewegung des Gewindestiftes (25) über ein Stirnzahnrad (29) auf eine Zahnradwalze (30) übertragen, die über eine Achse (31) mit einem Drehpotentiometer (32) verbunden ist. Die Zahnräder (29, 30) bilden mit dem Drehpotentiometer (32) den mechanisch-elektrischen Stellwertübertrager, durch den der mit dem Handrad (27) eingestellte Sollwert über die Sollwertleitung (28) an die Regeleinheit (13) übertragen wird. Die Zahnradwalze (30) besitzt eine Länge L, welche dem Weg entspricht, den das Stirnzahnrad (29) bei Betätigung des Handrades (27) in axialer Richtung ausführen kann. Zur Übertragung des Verschiebesteuersignals ist die Regeleinheit (13) über eine Signalleitung (34), eine Durchführung (35) und die Anschlußleitungen (36, 37) mit der Tauchspule (17) verbunden.

Zum Betrieb wird über das Handrad (27) bei stromloser Tauchspule (17) der gewünschte Auslaßdruck eingestellt und die Stellung des Handrades über die Sollwertleitung (28) an die Regeleinheit (13) übermittelt. Dadurch hebt sich die Kugel (5) von ihrem Sitz (6), und es strömt Gas über die Einlaßöffnung (8) in die Einlaßkammer (1), durch das Ventil in die Auslaßkammer (2) zur Auslaßöffnung (9) zu einem nicht dargestellten Verbraucher. Der Auslaßdruck in der Auslaßkammer (2) stellt sich zunächst so ein, daß die durch ihn auf die Membran (7) wirkende Kraft im Gleichgewicht zu der von der Feder (22) auf die Membran (7) wirkenden Kraft steht. Der Auslaßdruck wird über den Drucksensor (11) gemessen und als Istwert an die Regeleinheit (13) weitergegeben. Diese bildet aus Vergleich von Sollwert und Istwert ein Verschiebesteuersignal, welches über die Signalleitung (34) der Tauchspule (17) in Form eines Stromes zugeführt wird. Die von der Tauchspule (17) dadurch erzeugte Kraft wird je nach Stromrichtung zu der von der Feder erzeugten Kraft addiert oder von ihr subtrahiert, und zwar so, daß Istwert und Sollwert in Übereinstimmung kommen.

**Ansprüche**

1. Druckminderer mit einer Einlaßkammer, die an eine Auslaßkammer über ein Ventil verbindbar ist, das durch eine Kopplungselement betätigbar ist, welches an eine die Auslaßkammer gegenüber der Umgebung abschließende druckempfindliche Membran befestigt ist, wobei ein auslaßseitig angeordneter Druckaufnehmer mit einer Regeleinheit verbunden ist, über die das Kopplungselement durch eine Verschiebeeinrichtung entsprechend einem aus dem Vergleich zwischen gemessenem Auslaßdruck und einem der Regeleinheit vorgebbaren Drucksollwert gewonnenen Verschiebesteuersignal bewegbar ausgebildet ist und die Verschiebeeinrichtung durch ein in seiner Vorspannkraft veränderliches federelastisches Regulierelement einstellbar ist, dadurch gekennzeichnet, daß ein Stellwertübertrager (29, 30, 31, 32) an das mit einem Einsteller (27) versehene Regulierelement (22, 25) angekoppelt und zur Übertragung des Sollwertes über eine Sollwertleitung (28) an die Regeleinheit (13) verbunden ist.

2. Druckminderer nach Anspruch 1, dadurch gekennzeichnet, daß das Regulierelement aus einem Gewindestift (25) besteht, der mit seinem einen Ende mit einer die Verschiebeeinrichtung (17) angreifenden Feder (22) verbunden und an seinem anderen Ende mit einem Handrad (27) versehen ist.

3. Druckminderer nach einem der Ansprüche 1 und 2, dadurch gekennzeichnet, daß der Stellwertübertrager aus zwei ineinandergreifenden Zahnrädern (29, 30) besteht, von denen das eine (29) an dem Gewindestift (25) und das andere (30) an der Achse (31) eines Drehpotentiometers (32) befestigt ist.

4. Druckminderer nach Anspruch 2, dadurch gekennzeichnet, daß das Handrad (27) als elektrische Fernbetätigung ausgebildet ist.